(19) **Europäisches Patentamt**

**European Patent Office**

**Office européen des brevets**

(11) **EP 1 356 341 B1**

(12) **EUROPÄISCHE PATENTSCHRIFT**

(45) Veröffentlichungstag und Bekanntmachung des Hinweises auf die Patenterteilung:
**14.12.2005  Patentblatt 2005/50**

(21) Anmeldenummer: 02704625.9

(22) Anmeldetag: **04.02.2002**

(51) Int Cl.⁷: **G02C 7/02**

(86) Internationale Anmeldenummer:
**PCT/DE2002/000391**

(87) Internationale Veröffentlichungsnummer:
**WO 2002/061496 (08.08.2002 Gazette 2002/32)**

(54) **VERFAHREN ZUR DARSTELLUNG UND OPTIMIERUNG EINES DOPPELPROGRESSIVEN BRILLENGLASES**

METHOD FOR REPRESENTING AND OPTIMISING A DOUBLE-PROGRESSIVE SPECTACLE LENS

PROCEDE POUR FA ONNER ET OPTIMISER UN VERRE DE LUNETTE DOUBLEMENT PROGRESSIF

(84) Benannte Vertragsstaaten:
**AT BE CH CY DE DK ES FI FR GB GR IE IT LI LU MC NL PT SE TR**

(30) Priorität: **02.02.2001  DE 10104700**

(43) Veröffentlichungstag der Anmeldung:
**29.10.2003  Patentblatt 2003/44**

(73) Patentinhaber: **Rodenstock GmbH**
**80469 München (DE)**

(72) Erfinder:
 • **HAIMERL, Walter**
 **80337 München (DE)**
 • **PFEIFFER, Herbert**
 **81247 München (DE)**
 • **ESSER, Gregor**
 **81735 München (DE)**
 • **ALTHEIMER, Helmut**
 **87650 Lauchdorf (DE)**
 • **WELK, Andrea**
 **81547 München (DE)**
 • **BAUMBACH, Peter**
 **81543 München (DE)**

(74) Vertreter: **Müller-Boré & Partner Patentanwälte**
**Grafinger Strasse 2**
**81671 München (DE)**

(56) Entgegenhaltungen:
**US-A- 6 106 118          US-A- 6 123 422**

## Beschreibung

### Technisches Gebiet

Die Erfindung bezieht sich auf ein Verfahren zur Fertigung eines doppelprogressiven Brillenglases, das insbesondere die Darstellung und Optimierung der beiden Flächen dieses Brillenglases umfasst.

Unter einem doppelprogressiven Brillenglas wird im Rahmen der vorliegenden Anmeldung ein Brillenglas verstanden, bei dem sowohl die Vorderfläche als auch die augenseitige Fläche zum Anstieg der Wirkung vom Fernteil zum Nahteil beitragen.

### Stand der Technik

Progressive Brillengläser sind seit langem bekannt. Bei den meisten der aus der Patentliteratur bekannten progressiven Brillengläsern ist lediglich eine Fläche progressiv; damit ist gemeint, dass lediglich eine Fläche zum Anstieg der Wirkung vom Fernteil zum Nahteil beiträgt.

Bei Brillengläsern, bei denen lediglich eine Fläche zum Anstieg der Wirkung vom Fernteil zum Nahteil beiträgt, ist es bekannt, daß eine bestimmte "Serie" von progressiven "Basiskurven" vorab berechnet und gefertigt wird, wobei die zweite (nicht progressive) Fläche noch nicht bearbeitet ist. Als Basiskurve bezeichnet man eine Fläche mit einem bestimmten Flächenbrechwert im Fernbezugspunkt (nach ISO) und einer je nach Vorgabe unterschiedlichen (Flächen)-Addition. (Die (Flächen)-Addition nach ISO-Norm ist der Unterschied zwischen dem Flächenbrechwert im Fernbezugspunkt und dem im Nahbezugspunkt.)

Einseitig fertige, in der Regel rohrunde, Brillengläser bezeichnet man auch als Blanks. Die progressive Fläche ist in diesen Fällen häufig die Vorderfläche.

Die gemäß dem Rezept vorgegebene Wirkung im sogenannten "Fernbezugspunkt" wird dann durch eine entsprechend gestaltete zweite Fläche, im Falle einer progressiven Vorderfläche also durch entsprechende Auswahl der augenseitigen Fläche realisiert. Die zweite Fläche erzeugt dann auch die eventuell verordnete astigmatische Wirkung. Da in jedem Falle die zweite Fläche die im Rezept verordneten Wirkung herbeiführt, wird die zweite Fläche auch als Rezeptfläche bezeichnet.

Hierbei ist es ferner bekannt, dass die Rezeptfläche für individuelle Gebrauchsbedingungen, wie zum Beispiel Pupillenabstand, Vorneigung, Hornhaut/Scheitel-Abstand etc. unter Berücksichtung der so genannten (allgemeinen) Verordnung (Wirkung im Fernbezugspunkt, Astigmatismus und Lage der Astigmatismusachse sowie der Addition) individuell berechnet wird. Ausdrücklich wird daraufhin gewiesen, dass die vorstehende Aufzählung der individuellen Gebrauchsbedingungen nicht abschließend ist. Vielmehr wir auf die allgemeine Literatur verwiesen.

Weiterhin ist es bekannt, ausgehend von einem einseitig fertigen Brillenglas mit einer (fertigen) sphärischen, asphärischen, torischen oder atorischen Fläche - in der Regel die Vorderfläche - die progressive Fläche unter Berücksichtigung der individuellen Gebrauchsbedingungen sowie des Brillenrezeptes zu berechnen. Die progressive Fläche, die dann nicht nur den Wirkungsanstieg, sondern auch die so genannten Rezeptwerte "bereitstellt", ist dann in der Regel die augenseitige Fläche.

Weiterhin ist in der Patentliteratur bereits seit langem vorgeschlagen worden, Brillengläser mit zwei progressiven Flächen, d.h. mit zwei Flächen, die zum Wirkungsanstieg vom Fernbezugspunkt zum Nahbezugspunkt beitragen, zu versehen.

Die Verwendung von Brillengläsern mit zwei progressiven Flächen hat zum einen den Vorteil, dass der Wirkungsanstieg zwischen dem Fernbezugspunkt und den Nahbezugspunkt, also die Addition, auf zwei proessive Flächen aufgeteilt wird. Da die Fehler und insbesondere der Maximalwert des auf der jeweiligen Fläche vorliegenden Flächenastigmatismus mit der Addition dieser Fläche stärker als linear zunimmt, erhält man bei einem progressiven Brillenglas mit zwei progressiven Flächen bereits aus diesem Grunde geringere Bildfehler als bei einem progressiven Brillenglas mit nur einer progressiven Fläche und der gleichen "Gesamt-Addition".

Zudem ist es möglich, die Maxima des störenden Flächenastigmatismus sowie anderer störender Bildfehler bei der Vorderfläche und bei der augenseitigen Fläche an unterschiedliche Stellen "zu legen", so dass der vektorielle Addition zu insgesamt kleineren Werten führt. Weiterhin können sich die Bildfehler der Vorderfläche und der augenseitigen Fläche zumindest teilweise kompensieren.

Die vorstehenden Ausführungen zeigen, dass ein progressives Brillenglas mit zwei progressiven Flächen Vorteile verglichen mit einem progressiven Brillenglas mit nur einer progressiven Fläche auch dann hat, wenn bei einem progressiven Brillenglas mit nur einer progressiven Fläche die zweite Fläche unter Berücksichtigung der Rezeptwerte sowie gegebenenfalls zur Kompensation eventueller Bildfehler der progressiven Fläche eigens berechnet wird.

Andererseits können durch die individuelle Berechnung einer progressiven Fläche viele Fehler und damit Unverträglichkeiten von progressiven Brillengläsern vermieden werden.

Bei progressiven Gläsern mit nur einer progressiven Fläche ist es nämlich Stand der Technik, zu einer gegebenen Fläche, etwa einer Sphäre oder einem Torus - eine progressive Fläche derart hinzu zu optimieren, daß z.B. eine vorgebbare Zielfunktion, die die optische und geometrische Qualität definiert, minimiert wird.

Die individuelle Berechnung wenigstens einer progressiven Fläche eines progressiven Brillenglases mit zwei progressiven, d. h. zum Wirkungsanstieg beitragenden Flächen ist bislang nicht bekannt.

Diese individuelle Berechnung wäre jedoch insbesondere dann interessant, wenn individuelle Brillengläser mit zwei progressiven Flächen gefertigt werden sollen, deren Eigenschaften denen von individuell berechneten Brillengläsern mit einer progressiven Fläche überlegen sind.

In diesem Falle besteht auch ein Interesse daran, Brillengläser mit zwei progressiven Flächen schnell und vor allem in einem automatischen Optimierungsprozess zu berechnen.

**Darstellung der Erfindung**

Der Erfindung liegt die Aufgabe zu Grunde, ein Verfahren zur Fertigung eines doppelprogressiven Brillenglases anzugeben, das insbesondere die Darstellung und Optimierung der beiden Flächen dieses Brillenglases umfasst, das die individuelle Berechnung und Fertigung eines Brillenglases mit zwei progressiven Flächen erlaubt. Insbesondere soll die Erfindung die automatisierte Berechnung von individuellen Brillengläsern mit zwei progressiven Flächen erlauben.

Eine erfindungsgemäße Lösung dieser Aufgabe ist im Patentanspruch 1 angegeben. Weiterbildungen der Erfindung sind Gegenstand der abhängigen Ansprüche.

Scheinbar naheliegend wäre es, auch bei der Berechung von doppelprogressiven Brillengläsern den gleichen Weg einzuschlagen wie bei herkömmlichen individuell optimierten progressiven Brillengläsern. In diesem Falle würde man zu einer gegebenen progressiven Fläche, die nur einen gewissen Teil der Addition des Brillenglases aufbringt, eine zweite Fläche hinzu optimieren, die dann den Rest des verordneten Brechwertzuwachses sowie gegebenenfalls individuelle Korrekturen - Astigmatismus, Lage der Astigmatismusachse, Brechwertfehler etc. - leistet. In Extremfällen könnte die vorgegebene Fläche sogar zuviel zur Addition beitragen, die andere - hinzu optimierte - Fläche wäre dann eine degressive Fläche, d. h. eine Fläche, durch deren Beitrag sich die Addition der Brillenlinse insgesamt verringert wird.

Kennzeichnend für diese Vorgehensweise ist, daß eine der beiden progressiven Flächen konstant gehalten wird bzw. vorgegeben ist, ihre Koeffizienten werden also bei der Optimierung der anderen Fläche nicht variiert. Alle Freiheitsgrade liegen damit in der variierten Fläche. Diese Vorgehensweise entspricht der herkömmlichen Vorgehensweise, bei der Blanks "auf Lager" gefertigt werden

Erfindungsgemäß ist jedoch erkannt worden, dass man zu wesentlich besseren Optimierungsergebnissen nur dann kommt, wenn man die Vorder- und die Rückfläche gleichzeitig optimiert, d.h. die Koeffizienten beider Flächen simultan variiert. In diesem Falle kann man nämlich über die Freiheitsgrade von Vorder- und Rückfläche zugleich verfügen.

Dies steht im Gegensatz zu der Vorgehensweise eines auf dem einschlägigen Gebiet tätigen Fachmanns: dieser würde nämlich nicht nur an der herkömmlichen Vorgehensweise fest halten, bei der Blanks gefertigt werden, sondern er würde auch wohl Vorder- und Rückfläche als Splines auf zwei Gittern darstellen, d.h. die Vorderfläche als Spline im Gitter der Vorderfläche und die Rückfläche als Spline im Gitter der Rückfläche mit jeweils einem eigenen Koordinatensystem.

Bei der Optimierung in Gebrauchsstellung ergeben sich dann aber Probleme, die in der Lage der Darstellungsgitter der Splines von Vorder- und Rückfläche zueinander liegen. Eines dieser Probleme liegt am Rand des jeweils zu optimierenden Gebietes. Innerhalb des Randes des Splinegitters ist die Fläche bestimmt durch die Koeffizienten, außerhalb ist sie unbestimmt.

Zu Beginn der Optimierung - im sogenannten Startzustand - würde man die Gitter natürlich so wählen, daß jeder Hauptstrahl, der durch den Augendrehpunkt und einen der Bewertungspunkte auf der Rückfläche (oder der Vorderfläche) geht, die Vorderfläche (oder die Rückfläche) innerhalb des Gitterbereiches des Splines durchstößt. Dann haben Pfeilhöhen, Flächennormalen und Flächenkrümmungen auf der jeweiligen Fläche gültige Werte. Während der Optimierung kann jedoch der Fall auftreten, daß die Pfeilhöhen und die Flächennormalen der einen Fläche derartige Werte annehmen, daß der Hauptstrahl die andere Fläche außerhalb des Gitters, also in einem ungültigen Bereich durchstoßen würde. Das würde zu ungültigen Werten in der Zielfunktion führen und die Optimierung unnötig erschweren.

Ein weiteres Problem, das vor allem bei starken Wirkungen auftritt, besteht darin, daß bei festgehaltenem Bewertungsgitter auf der Rückfläche die Divergenz der Hauptstrahlen zwischen den brechenden Flächen während der Optimierung so groß werden kann, daß auf der Vorderfläche ganze Teilgitterbereiche ohne Durchstoßpunkt und somit unbewertet bleiben. Die dort wirkenden Koeffizienten können dann je nach verwendetem Optimierungsverfahren auf eine Weise verändert werden, die die optischen Eigenschaften lokal deutlich verschlechtert.

**Allgemeine Beschreibung der Erfindung**

Erfindungsgemäß wird ein Verfahren angegeben, bei dem (bevorzugt) die Vorderfläche im Gitter der Rückfläche dargestellt wird. Prinzipiell, jedoch nicht bevorzugt, ist aber auch die umgekehrte Vorgehensweise möglich.

Jeder Punkt auf der Vorderfläche wird beschrieben durch einen über den Hauptstrahl durch den Augendrehpunkt korrespondierenden Punkt auf der Rückfläche und die sogenannte schräge Dicke entlang dieses Hauptstrahls. Wenn ein Punkt mit dem Ortsvektor $r_2$ $(x_2, y_2)$ auf der Rückfläche gegeben ist, dann lässt sich der korrespondierende Punkt auf der Vorderfläche

$r_1$ ($x_2$, $y_2$) berechnen durch

$$\vec{r}_1(x_2,y_2) = \vec{r}_2(x_2,y_2)- d(x_2,y_2)\cdot \vec{t}(x_2,y_2) \qquad (1)$$

Der Index 1 bezieht sich auf die Vorderfläche, während der Index 2 sich auf die Rückfläche bezieht.

t    ist der Einheitsvektor des Hauptstrahls zwischen den beiden Flächen in Lichtrichtung,

D    eine skalare Größe, ist die sogenannte schräge Dicke,

Der Vektor -d * t zeigt vom Durchstoßpunkt des Hauptstrahls durch die Rückfläche zum Durchstoßpunkt durch die Vorderfläche.

Die Vorderfläche ist also bei dieser Definition nur dort gegeben bzw. definiert, wenn ein Hauptstrahl durch die Rückfläche existiert bzw. erfolgreich durchgerechnet werden kann. Die schräge Dicke ersetzt die Funktion der Vorderfläche. Die schräge Dicke wird dargestellt durch Splines. Bei der simultanen Optimierung werden die Koeffizienten der Rückfläche zusammen mit den Koeffizienten der schrägen Dicke variiert.

Während der Optimierung erfolgt in jedem Optimierungsschritt die Berechnung der Zielfunktion, die die Abweichung der Eigenschaften des aktuellen Glases von den idealen Vorstellungen berechnet. Zur Berechnung der Eigenschaften des Brillenglases benötigt man differentialgeometrische Größen wie Flächennormalen und Krümmungen an den Durchstoßpunkten der Hauptstrahlen durch die Flächen, zu deren Bestimmung wiederum partielle Ableitungen benötigt werden.

Die Berechnung dieser Größen ist aus der Literatur bekannt, so dass auf sie an dieser Stelle nicht näher eingegangen werden soll.

In der erfindungsgemäß verwendeten Darstellung unterscheidet sich die Berechnung der partiellen Ableitungen jedoch vom Standardfall, da die Vorderfläche nicht wie üblich in ihrem eigenen Koordinatensystem K1 durch die Koordinaten der Vorderfläche $x_1$ und $y_1$ dargestellt wird, (etwa durch die Ortsvektoren $r_1$ ($x_1$, $y_1$)), sondern im Koordinatensystem der Rückfläche K2 durch die Koordinaten $x_2$ und $y_2$:

$$r_1\ (x_2, y_2).$$

Die partiellen Ableitungen der Vorderfläche nach den Koordinaten der Rückfläche ergeben sich durch Differentiation von (1):

$$\frac{\partial \vec{r}_1}{\partial x_2} = \frac{\partial \vec{r}_2}{\partial x_2} - \frac{\partial d}{\partial x_2}\cdot \vec{t}-d\cdot \frac{\partial \vec{t}}{\partial x_2}$$

$$\frac{\partial \vec{r}_1}{\partial x_2} = \frac{\partial \vec{r}_2}{\partial x_2} - \frac{-\partial d}{\partial x_2}\cdot \vec{t}-d\cdot \frac{\partial \vec{t}}{\partial x_2}$$

$$\frac{\partial \vec{r}_1}{\partial x_2} = \frac{\partial \vec{r}_2}{\partial x_2} - \frac{\partial d}{\partial x_2}\cdot \vec{t}-d\cdot \frac{\partial \vec{t}}{\partial x_2}$$

$$\frac{\partial \vec{r}_1}{\partial x_2} = \frac{\partial \vec{r}_2}{\partial x_2} - \frac{\partial d}{\partial x_2}\cdot \vec{t} - d\cdot \frac{\partial \vec{t}}{\partial x_2}$$

$$\frac{\partial \vec{r}_1}{\partial x_2} = \frac{\partial \vec{r}_2}{\partial x_2} - \frac{\partial d}{\partial x_2}\cdot \vec{t}- d\cdot \frac{\partial \vec{t}}{\partial x_2}$$

Damit sind die zur Berechnung der Flächeneigenschaften der Vorderfläche notwendigen Ableitungen gegeben. Die differentialgeometrischen Größen wie Flächennormalenvektor und Hauptkrümmungen ergeben sich dann wie im Standardfall.

Bei der Realisierung des Brillenglases nach dem hier angegebenen Verfahren hat man verschiedene Optionen:

Eine Option betrifft die Aufteilung der Addition auf Vorder- und Rückfläche. Während beim Stand der Technik der Weg gegangen wird, die Vorderfläche mit einer flächenhaften Addition zu versehen, die die tatsächlich notwendige Addition übersteigt, und die die Rückfläche notwendigerweise "degressiv" macht, ist es nach dieser Erfindung bevorzugt, daß sich die flächenhaften Additionen entweder gleichmäßig (im Verhältnis Vorderfläche zu Rückfläche von 50/50) aufteilen oder höchstens im Verhältnis 80/20 oder wenigstens im Verhältnis 20/80. Bei einem Vorschlag gemäß dem Stand der Technik (Johnson & Johnson) wäre dieses Verhältnis beispielsweise 130/100.

Eine andere Option besteht in der Aufteilung des Astigmatismus auf Vorder- und Rückfläche. Bei einem verordneten Astigmatismus muß mindestens eine der beiden Flächen die astigmatische Wirkung erzeugen. In der Regel ist das beim Stand der Technik die Rückfläche. Erfindungsgemäß kann nicht nur die Addition, sondern auch der Astigmatismus beliebig auf Vorder- und Rückfläche aufgeteilt werden.

Beispielsweise ist es denkbar, bei einer Verordnung von 2 dpt Astigmatismus die Vorderfläche mit 4 dpt Astigmatismus zu versehen, den man dann auf der Rückfläche entsprechend kompensieren muß mit 2 dpt in der richtigen Achslage. Das Verhältnis des Flächenastigmatismus zwischen Vorder- und Rückfläche ist in diesem Fall 2. Aber auch bei Verordnungen mit Astigmatismus 0 kann ein Flächenastigmatismus "künstlich' eingeführt werden, z.B. 1.5 dpt auf der Vorderfläche, der dann kompensiert wird durch 1.5 dpt auf der Rückfläche. Das Verhältnis des Flächenastigmatismus zwischen Vorder- und Rückfläche ist in diesem Fall 1.

Die Vorteile dieser Aufteilungen gegenüber einfach progressiven Brillengläser bestehen einerseits in der Verringerung des Gewichts durch die Reduktion der kritischen Dicke um mindestens 10%, andererseits in der Reduktion des peripheren Astigmatismus in Gebrauchsstellung um bis zu 30%.

## Patentansprüche

1. Verfahren zur Fertigung eines doppelprogressiven Brillenglases, das insbesondere die Darstellung und Optimierung der beiden Flächen dieses Brillenglases umfasst,
   **gekennzeichnet durch** folgende Schritte:

   - Wahl eines geeigneten Koordinatensystems K2 für die Darstellung der Rückfläche,
   - Wahl eines geeigneten Gitters G für die Darstellung des Splines der Rückfläche eines zu optimierenden Ausgangsglases im Koordinatensystem K2,
   - Belegung eines Splines mit den Pfeilhöhendaten der Rückfläche (Rückflächenspline),
   - Definition der Position des Augendrehpunktes,
   - Durchrechnung der Hauptstrahlen vom Augendrehpunkt **durch** das Ausgangsglas an den Gitterpunkten von G,
   - Berechnung der Länge der Strecke zwischen den Durchstoßpunkten des gerade berechneten Hauptstrahls **durch** Vorder- und Rückfläche (schrägen Dicke),
   - Belegung eines Splines mit den Daten der schrägen Dicke (Dickenspline),
   - Wahl eines Satzes von Bewertungsstellen, an denen die optische Qualität für die Zielfunktion berechnet wird,
   - geeignete Wahl von gewissen optischen und geometrischen Vorgaben, die an den Bewertungsstellen idealerweise erreicht werden sollen,
   - Definition der Zielfunktion als Abweichung der Qualität des aktuellen Brillenglases von diesen idealen Werten,
   - Start der Optimierung,
   - Auswertung in jedem Optimierungsschritt der optischen Eigenschaften in Gebrauchsstellung an den Bewertungsstellen mittels der zu berechnenden Flächeneigenschaften und der aktuellen Hauptstrahldaten,
   - Beenden der Optimierung, wenn die Zielfunktion einen bestimmten Wert unterschritten hat, oder nach einer vorgebbaren maximalen Zahl von Optimierungsschritten, und
   - Fertigung der so berechneten Fläche.

2. Verfahren nach Anspruch 1
   **dadurch gekennzeichnet, daß** die Rückfläche durch einen Spline auf einem zweidimensionalen Gitter in dem Koordinatensystem K2 der Rückfläche und durch die Ortsvektoren $\vec{r_2}$ $(x_2, y_2)$ zu den Gitterpunkten im K2 dargestellt wird, während die Vorderfläche in dem selben Koordinatensystem K2 dargestellt durch den Ortsvektor

$$\vec{r_1}\,(x_2, y_2) = \vec{r_2}\,(x_2, y_2) - d\,(x_2, y_2) \cdot \vec{t}\,(x_2, y_2)$$

also durch den Punkt auf der Rückfläche und die als Spline dargestellte schräge Dicke d entlang des Hauptstrahl-Einheitsvektors $\vec{t}$.

3. Verfahren nach Anspruch 1 oder 2,
   **dadurch gekennzeichnet, daß** die Spline-Koeffizienten der Rückfläche und die Spline-Koeffizienten der schrägen Dicke in einem Optimierungsverfahren simultan optimiert werden.

4. Verfahren nach einem der Ansprüche 1 bis 3,
   **dadurch gekennzeichnet, daß** das zweidimensionale Gitter, auf dem der Spline dargestellt wird, äquidistant oder nicht äquidistant sein kann.

5. Verfahren nach einem der Ansprüche 1 bis 4,
   **dadurch gekennzeichnet, daß** Koordinaten krummlinige Koordinaten sind.

6. Verfahren nach einem der Ansprüche 1 bis 5,
   **dadurch gekennzeichnet, daß** der Flächenbrechwertzuwachs auf Vorder- und Rückfläche in einem Verhältnis, das zwischen 80/20 und 20/80 liegt, aufgeteilt ist.

7. Verfahren nach einem der Ansprüche 1 bis 6,
   **dadurch gekennzeichnet, daß** der Flächenastigmatismus in einem beliebigen Verhältnis zwischen Vorder- und Rückfläche aufgeteilt ist.

8. Verfahren nach Anspruch 7,
   **dadurch gekennzeichnet, daß** das Verhältnis des Flächenastigmatismus zwischen Vorder- und Rückfläche kleiner als 4 ist.

9. Verfahren nach Anspruch 7 oder 8,
   **dadurch gekennzeichnet, daß** das Verhältnis des Flächenastigmatismus zwischen Vorder- und Rückfläche kleiner gleich 1 ist.

10. Doppelprogressive Brillenlinse nach einem der Ansprüche 1 bis 9,
    **dadurch gekennzeichnet, daß** es nach einem der Ansprüche 1 bis 9 berechnet ist.

11. Brillenlinse nach Anspruch 10,
    **dadurch gekennzeichnet, daß** die Addition und/oder das Astigmatismus auf Vorder- und/oder Rückfläche aufgeteilt ist.

**Claims**

1. Method for producing a double-progressive spectacle lens which comprises in particular the representation and optimisation of both surfaces of this spectacle lens,
   **characterised by** the following steps:

   - selecting a suitable coordinate system K2 for the representation of the back surface,
   - selecting a suitable grid G for the representation of the spline of the back surface of a starting lens to be optimised in the coordinate system K2,
   - assigning sagittal height data of the back surface to a spline (back surface spline),
   - defining the position of the centre of rotation of the eye,
   - computing the main rays from the centre of rotation of the eye through the starting lens at the grid points of G,
   - computing the length of the distance between the penetration points of the just-computed main ray through the front surface and the back surface (oblique thickness),
   - assigning data of the oblique thickness to a spline (thickness spline),
   - selecting a set of assessment points at which the optical quality for the target function is computed,
   - suitably selecting certain optical and geometric conditions which should ideally be achieved at the assessment points,
   - defining the target function as a deviation of the quality of the actual spectacle lens from these ideal values,
   - starting the optimisation,
   - evaluating in each optimisation step the optical properties in the position of use at the assessment points by means of the surface properties to be computed and the actual main ray data,
   - ending the optimisation when the target function is below a certain value, or after a specifiable maximum number of optimisation steps, and
   - producing the surface thus computed.

2. Method according to claim 1,
   **characterised in that** the back surface is represented by a spline on a two-dimensional grid in the coordinate system K2 of the back surface and by the radius vectors $\vec{r}_2\,(x_2, y_2)$ to the grid points in K2, whilst the front surface is represented in the same coordinate system K2 by the radius vector

$$\vec{r}_1(x_2,y_2)=\vec{r}_2\,(x_2,y_2)-d(x_2,\,y_2)\cdot\vec{t}(x_2,\,y_2)$$

i.e. by the point on the back surface and the oblique thickness d, represented as a spline, along the main ray unit vector $\vec{t}$.

3. Method according to claim 1 or 2,
   **characterised in that** the spline coefficients of the back surface and the spline coefficients of the oblique thickness are optimised simultaneously in an optimisation process.

4. Method according to one of claims 1 to 3,
   **characterised in that** the two-dimensional grid, on which the spline is represented, may be equidistant or not equidistant.

5. Method according to one of claims 1 to 4,
   **characterised in that** coordinates are curvilinear coordinates.

6. Method according to one of claims 1 to 5,
   **characterised in that** the surface power increase is apportioned to the front surface and to the back surface in a ratio which is between 80/20 and 20/80.

7. Method according to one of claims 1 to 6,
   **characterised in that** the surface astigmatism is apportioned to the front surface and to the back surface in any desired ratio.

8. Method according to claim 7,
   **characterised in that** the ratio of the surface astigmatism of the front surface to that of the back surface is smaller than 4.

9. Method according to claim 7 or 8,
   **characterised in that** the ratio of the surface astigmatism of the front surface to that of the back surface is smaller than or equal to 1.

10. Double-progressive spectacle lens according to one of claims 1 to 9,
    **characterised in that** it is computed according to one of claims 1 to 9.

11. Spectacle lens according to claim 10,
    **characterised in that** the addition power and/or the astigmatism are/is apportioned to the front surface and/or the back surface.

**Revendications**

1. Procédé de fabrication d'un verre de lunette à progression double, qui comprend en particulier la représentation et l'optimisation des deux surfaces de ce verre de lunette,
**caractérisé par** les étapes suivantes:

- sélection d'un système de coordonnées approprié K2 pour la représentation de la surface arrière,
- sélection d'un réseau approprié G pour la présentation de la courbe spline de la surface arrière d'un verre de départ à optimiser dans le système de coordonnées K2,
- documentation d'une courbe spline avec les données de flèches de la surface arrière (courbe spline de la surface arrière),
- définition de la position du centre de rotation de l'oeil,
- calcul d'un bout à l'autre des rayons principaux allant du centre de rotation de l'oeil à travers le verre de départ aux noeuds du réseau G,
- calcul de la longueur du trajet entre les points de percée du rayon principal juste calculé à travers les surfaces avant et arrière (épaisseurs obliques),
- documentation d'une courbe spline avec les données des épaisseurs obliques (courbe spline d'épaisseur),
- sélection d'un jeu de points d'évaluation, auxquels la qualité optique pour la fonction cible est calculée,
- sélection appropriée de certaines données optiques et géométriques prédéterminées, qui doivent être atteintes d'une manière idéale,
- définition de la fonction cible en tant que déviation de la qualité du verre de lunette actuel par rapport aux valeurs idéales,
- démarrage de l'optimisation,
- évaluation, au cours de chaque étape d'optimisation, des propriétés optiques dans la position d'utilisation aux points d'évaluation à l'aide des propriétés de surface à calculer et des données actuelles de rayons principaux,
- achèvement de l'optimisation, lorsque la fonction cible a passé en dessous d'une certaine valeur ou après un nombre maximal prédéterminé d'étapes d'optimisation, et
- fabrication de la surface ainsi calculée.

2. Procédé selon la revendication 1, **caractérisé en ce que** la surface arrière est représentée par une courbe spline sur un réseau bi-dimensionnel dans le système de coordonnées K2 de la surface arrière et par les vecteurs locaux $\vec{r}_2(x_2, y_2)$ aux noeuds du réseau dans K2, alors que la surface avant est représentée dans le même système de coordonnées K2 par le vecteur local $\vec{r}_1(x_2, y_2) = \vec{r}_2(x_2, y_2) - d(x_2, y_2).\vec{t}(x_2, y_2)$ par conséquent, par le point sur la surface arrière et par l'épaisseur oblique d, représentée en tant que courbe spline, le long du vecteur *unita*ire de rayon principal t.

3. Procédé selon la revendication 1 ou 2, **caractérisé en ce que** les coefficients de la courbe spline de la surface arrière et les coefficients de la courbe spline de l'épaisseur oblique sont optimisés de manière simultanée dans un procédé d'optimisation.

4. Procédé selon l'une quelconque des revendications 1 à 3, **caractérisé en ce que** le réseau bidimensionnel, sur lequel la courbe spline est représentée, peut ou peut ne pas être équidistant.

5. Procédé selon l'une quelconque des revendications 1 à 4, **caractérisé en ce que** les coordonnées sont des coordonnées curvilignes.

6. Procédé selon l'une quelconque des revendications 1 à 5, **caractérisé en ce que** l'accroissement du pouvoir réfringent des surfaces sur les surfaces avant et arrière est subdivisé dans un rapport qui se situe entre 80/20 et 20/80.

7. Procédé selon l'une quelconque des revendications 1 à 6, **caractérisé en ce que** l'astigmatisme de surface est subdivisé dans un rapport quelconque entre les surfaces avant et arrière.

8. Procédé selon la revendication 7, **caractérisé en ce que** le rapport de l'astigmatisme de surface entre la surface avant et la surface arrière est inférieur à 4.

9. Procédé selon la revendication 7 ou 8, **caractérisé en ce que** le rapport de l'astigmatisme de surface entre la surface avant et la surface arrière est inférieur à 1.

10. Verre de lunette à progression double selon l'une des revendications 1 à 9, **caractérisé en ce qu'**il est calculé selon l'une des revendications 1 à 9.

11. Verre de lunette selon la revendication 10, **caractérisé en ce que** l'addition et/ou l'astigmatisme est/sont réparti(s) sur les surfaces avant et/ou arrière.